# EUROPEAN PATENT APPLICATION

(11) **EP 2 648 458 A1**
(43) Date of publication of application: **09.10.2013**
(21) Application number: 11844501.4
(22) Date of filing: 16.11.2011
(51) Int. Cl.: H04W 48/06, H04W 28/08, H04W 48/16, H04W 84/10

(54) **MOBILE COMMUNICATIONS NETWORK AND WIRELESS BASE STATION**

(30) Priority: 01.12.2010 JP 2010268166
(71) Applicant: NTT DOCOMO, Inc., Chiyoda-ku Tokyo 100-6150 (JP)
(72) Inventor: SAITOU, Yuuya, Tokyo 100-6150 (JP); MIKI, Nobuhiko, Tokyo 100-6150 (JP); OKUMURA, Yukihiko, Tokyo 100-6150 (JP); JATURONG, Sangiamwong, Tokyo 100-6150 (JP)
(74) Representative: HOFFMANN EITLE
(86) International application number: PCT/JP2011/076424
(87) International publication number: WO 2012/073697

(57) **Abstract**

A mobile terminal selects a radio base station that is the access point for the mobile terminal in accordance with received-radiowave characteristic values for respective radio base stations. The multiple radio base stations include a macrobase station and multiple picobase stations. Each picobase station includes a load measurement unit adapted for measuring or calculating the communication load index of the picobase station itself; an adjustment-value setting unit adapted for setting an adjustment value that is used by the mobile terminal to change the received-radiowave characteristic value of the picobase station itself, depending on the communication load index; and an adjustment-value signaling unit adapted for signaling the adjustment value set by the adjustment-value setting unit to the mobile terminal.

## Description

### TECFINICAL FIELD

The present invention relates to technology for controlling each radio base station in a mobile communications network including multiple sorts of radio base stations having different transmission powers.

### BACKGROUND ART

In a mobile communications network (heterogeneous network) in which multiple sorts of radio base station (e.g., a macrobase station and picobase stations) having different transmission powers are hierarchically located, a macrobase station having a higher transmission power is more likely to be selected as the access point of mobile terminals than a picobase station having a lower transmission power at the phase of cell search or handover. Accordingly, communication load tends to concentrate on the macrobase station. In order to alleviate the concentration of communication load, a technology called "range extension" was developed in which cells (picocells) formed by picobase stations are expanded, as disclosed in, for example, Non-patent Document 1. "Range extension" may also be called "cell range expansion".

### CITATION LIST

### Non-patent Documents

Non-patent Document 1: Aamod Khandekar et al., "LTE-Advanced: Heterogeneous Networks", Proc. 2010 European Wireless Conference, pp. 978-982, April 2010

### SUMMARY OF INVENTION

### TECHNICAL PROBLEMS

According to the technology for expanding each picocell as disclosed in Non-patent Document 1, it is true that opportunities in which picobase stations are selected as access points of mobile terminals increase. However, since picocells for multiple picobase stations are equally expanded, the number of accesses from mobile terminals will significantly increases for one or more specific picobase stations at regions at which there are many mobile terminals. If such imbalance in the number of connected terminals occurs in picobase stations, there will be problem that communication speed (throughput) decreases at picobase stations to which a large number of mobile terminals are connected. In view of the above circumstances, it is an object of the present invention to alleviate the concentration of connected terminals on specific radio base stations in a mobile communications network including multiple sorts of radio base stations having different transmission powers, and to improve communication efficiency.

### SOLUTION TO PROBLEMS

A mobile communications network according to a first aspect of the present invention includes multiple radio base stations, each of which is adapted for communicating with a mobile terminal, the mobile terminal measuring or calculating received-radiowave characteristic values each indicating characteristics of radiowaves from the multiple radio base stations, in which the multiple radio base stations includes a first radio base station that forms a first cell and multiple second radio base stations, each forming a second cell within the first cell, the second cell having an area that is smaller than that of the first cell, and in which each of the multiple second radio base stations includes: a load measurement unit adapted for measuring or calculating a communication load index of the second radio base station;
an adjustment-value setting unit adapted for setting an adjustment value that is used by the mobile terminal to change the received-radiowave characteristic value of radiowaves from the second radio base station, depending on the communication load index, the adjustment-value setting unit increases the adjustment value if the communication load index is lower than a first threshold, the adjustment-value setting unit decreases the adjustment value if the communication load index is higher than a second threshold that is higher than the first threshold; and an adjustment-value signaling unit adapted for signaling the adjustment value set by the adjustment-value setting unit to the mobile terminal.

In the mobile communications network of the first aspect, since the substantial size of each second cell formed by the corresponding second radio base station (thus, the substantial transmission power of the second radio base station) is adjusted, depending on the communication load of the second radio base station, it is possible to alleviate the concentration of connected terminals on specific second radio base stations. A specific example of the first aspect will be described in a first embodiment. The present invention can also be understood as a radio base station used for a second radio base station (e.g., picobase station 24) in the mobile communications network of the first aspect.

A mobile communications network according to a second aspect of the present invention includes multiple radio base stations each of which is adapted for communicating with a mobile terminal, the mobile terminal measuring or calculating received-radiowave characteristic values each indicating characteristics of radiowaves from the multiple radio base stations, in which the multiple radio base stations includes a first radio base station that forms a first cell and multiple second radio base stations, each forming a second cell within the first cell, the second cell having an area that is smaller than that of the first cell, and in which each of the multiple second radio base stations includes: a radio communication unit adapted for communicating wirelessly with the first radio base station; a power measurement unit adapted for measuring a reception power received at the radio communication unit from the first radio base station; an adjustment-value setting unit adapted for setting an adjustment value that is used by the mobile terminal to change the received-radiowave characteristic value of radiowaves from the second radio base station, depending on the reception power measured by the power measurement unit; and an adjustment-value signaling unit adapted for signaling the adjustment value set by the adjustment-value setting unit to the mobile terminal.

In the mobile communications network of the second aspect, since the substantial size of the second cell formed by the corresponding second radio base station is adjusted, depending on the distance between the second radio base station and the first radio base station, it is possible to alleviate the concentration of connected terminals on the first radio base station and specific second radio base stations. A specific example of the second aspect will be described in a second embodiment. The present invention can also be understood as a radio base station used for a second radio base station in the mobile communications network of the second aspect.

A mobile communications network according to a third aspect of the present invention includes multiple radio base stations, each of which is adapted for communicating with a mobile terminal, the mobile terminal measuring or calculating received-radiowave characteristic values each indicating characteristics of radiowaves from the multiple radio base stations, in which the multiple radio base stations includes a first radio base station that forms a first cell and multiple second radio base stations, each forming a second cell within the first cell, the second cell having an area that is smaller than that of the first cell, and in which the first radio base station includes: a speed estimation unit adapted for estimating a total sum of communication speeds of the first radio base station and the multiple second radio base stations; an adjustment-value setting unit adapted for setting an adjustment value for each second radio base station that is used by the mobile terminal to change the received-radiowave characteristic value of radiowaves from the second radio base station, so as to increase the total sum of the communication speeds of the first radio base station and the multiple second radio base stations from the total sum estimated by the speed estimation unit; and an adjustment-value signaling unit adapted for signaling the adjustment values for the respective second radio base stations set by the adjustment-value setting unit to the mobile terminals via the second radio base stations.

In the mobile communications network of the third aspect, since the adjustment value for each second radio base station is individually set so as to increase the total sum of the communication speeds, it is possible to alleviate the concentration of connected terminals on the first radio base station and specific second radio base stations, and to improve the overall communication efficiency of the first radio base station and the multiple second radio base stations. A specific example of the third aspect will be described in a third embodiment. The present invention can also be understood as a radio base station used for a second radio base station in the mobile communications network of the third aspect.

### BRIEF DESCRIPTION OF DRAWINGS

Fig. 1 is a block diagram of a radio communications system according to a first embodiment of the present invention;
Fig. 2 is a block diagram of a mobile terminal in the radio communications system;
Fig. 3 is a diagram describing the relationship between an adjustment value and the range of a cell in effect in the radio communications system;
Fig. 4 is a block diagram of a radio base station (macrobase station or picobase station) in the radio communications system;
Fig. 5 is a block diagram focusing on functions of a picobase station in the radio communications system;
Fig. 6 is a flowchart of operations in which the picobase station sets the adjustment value;
Fig. 7 is a functional block diagram of a picobase station in a second embodiment;
Fig. 8 is a functional block diagram of a picobase station in a third embodiment; and
Fig. 9 is a flowchart of operations of a macrobase station in the third embodiment.

### DESCRIPTION OF EMBODIMENTS

### A: FIRST EMBODIMENT

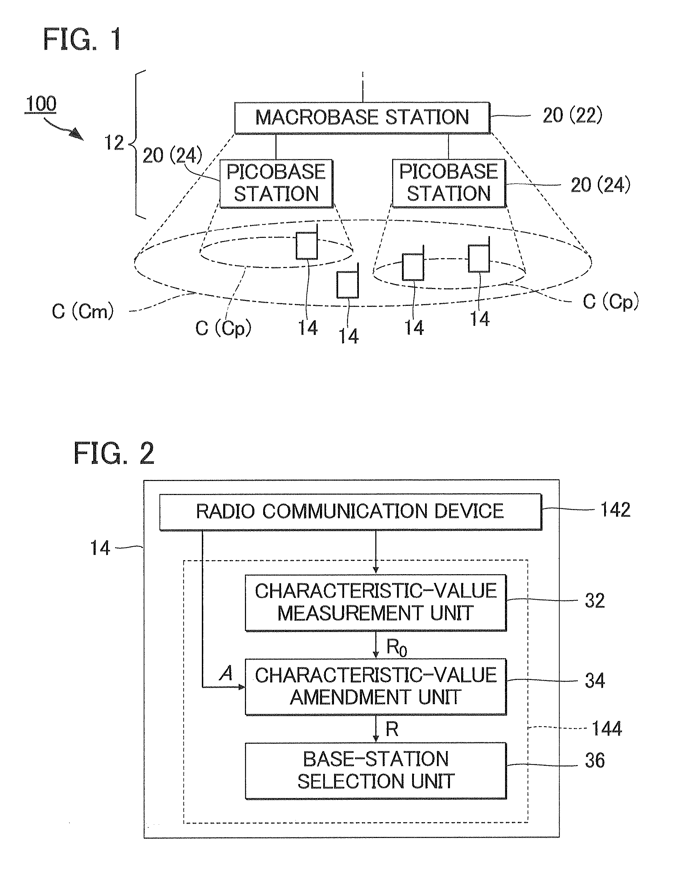

Fig. 1 is a block diagram of a radio communications system 100 according to a first embodiment of the present invention. The radio communications system 100 includes a mobile communications network 12 and multiple mobile terminals 14. The mobile communications network 12 is a communications network for providing radio communication services, such as voice calls and data communications to mobile terminals 14, and includes multiple radio base stations 20 connected mutually. Each radio base station 20 executes radio communication with mobile terminals 14 located in a cell C (Cm or Cp) formed by the radio base station 20 itself. Each radio base station 20 may be an NB (Node B) in the UMTS (Universal Mobile Telecommunications System) or an e-Node B in the UMTS LTE (Long Term Evolution).

The mobile terminal 14 is, for example, a cell phone (UE (User Equipment) in UMTS LTE), and communicates with other communication devices (other mobile terminals 14 or server device) via radio base stations 20 of the mobile communications network 12. The radio communication scheme used in radio base stations 20 and mobile terminals 14 is optional. For example, OFDMA (Orthogonal Frequency Division Multiple Access) may be used for downlink communications, whereas SC-FDMA (Single-Carrier Frequency Division Multiple Access) may be used for uplink communications.

The multiple radio base stations 20 of the mobile communications network 12 are classified into macrobase stations 22 and picobase stations 24 by transmission power. Multiple picobase stations 24 are connected to each macrobase station 22. Although only a single macrobase station 22 is illustrated in Fig. 1 for descriptive purposes, in fact, many interconnected macrobase stations 22 are located and multiple picobase stations 24 are connected to each macrobase station 22. If the radio communications system 100 complies with LTE, for example, an X2-interface is used for a link between macrobase stations 22, and between macrobase stations 22 and picobase station 24. However, the radio base stations 20 may communicate mutually via an RNC (Radio Network Controller).

The macrobase station (first radio base station) 22 has a high transmission power (maximum transmission power) in comparison with the picobase station (second radio base station) 24. Therefore, the cell C (hereinafter referred to as "macrocell Cm") formed by the macrobase station 22 is larger in area than the cell C (hereinafter referred to as "picocell Cp") formed by the picobase station 24. For example, whereas the macrocell (first cell) Cm has a radius from several hundred meters to several tens of kilometers, the picocell (second cell) Cp has a radius several meters to several tens of meters. As shown in Fig. 1, multiple picobase stations 24 are located in the macrocell Cm of each macrobase station 22. Therefore, multiple picocells Cp are formed in a macrocell Cm. As will be understood from the above description, the mobile communications network 12 is a communications network (heterogeneous network) in which multiple sorts of radio base stations 20 having different transmission powers are hierarchically located.

Fig. 2 is a block diagram of each mobile terminal 14 in the radio communications system. The mobile terminal 14 includes a radio communication device 142 and an arithmetic processing unit 144. Illustration of output devices for outputting voice and images and input devices for accepting instructions from the user is omitted for descriptive purposes.

The radio communication device 142 is a communication instrument for wireless communication with a radio base station 20 (macrobase station 22 or picobase station 24) that forms a cell C where the mobile terminal 14 itself is located. The radio communication device 142 includes a receiving circuit that receives radiowaves from the radio base station 20 and transforms the radiowaves to electrical signals, and a transmitting circuit that transforms electrical signals, such as voice signals, to radiowaves and sends the radiowaves. In the first embodiment, the radio communication device 142 receives an adjustment value *A* (that will be described in detail later) from a picobase station 24 that forms a picocell Cp where the mobile terminal 14 itself is located.

The arithmetic processing unit 144 performs multiple functions (a characteristic-value measurement unit 32, a characteristic-value amendment unit 34, and a base-station selection unit 36) by executing a program stored in a memory circuit (not shown). It is possible to use a structure in which the functions of the arithmetic processing unit 144 are distributed to multiple integrated circuits, or a structure in which each of the functions is performed by a dedicated electronic circuit (DSP (Digital Signal Processor)).

The characteristic-value measurement unit 32 measures or calculates a characteristic value (hereinafter referred to as "received-radiowave characteristic value") R₀ of radiowaves that the radio communication device 142 receives from each radio base station 20. A typical example of the received-radiowave characteristic value R₀ is the reception power. However, for example, the SIR (Signal-to-Interference Ratio) or the SNR (Signal-to-Noise Ratio) may be used as the received-radiowave characteristic value R₀.

The characteristic-value amendment unit 34 adjusts the received-radiowave characteristic value R₀ specified by the characteristic-value measurement unit 32 for each picobase station 24 according to the adjustment value *A* that the radio communication device 142 receives from the picobase station 24, thereby calculating a received-radiowave characteristic value R. More specifically, the sum of the received-radiowave characteristic value R₀ for a picobase station 24 and the adjustment value *A* for the picobase station 24 is calculated as an adjusted received-radiowave characteristic value R (i.e., R = R₀ + A). In other words, the adjustment value *A* in the first embodiment means an offset value for the received-radiowave characteristic value R. On the other hand, the characteristic-value amendment unit 34 does not adjust the received-radiowave characteristic value R₀ measured by the characteristic-value measurement unit 32 for each macrobase station 22, and fixes it as a received-radiowave characteristic value R.

The base-station selection unit 36 selects a radio base station 20 (macrobase station 22 or picobase station 24) to which the mobile terminal 14 should actually connect, among multiple radio base stations 20 that can communicate with the mobile terminal 14, in accordance with received-radiowave characteristic values R for the radio base stations 20. The selection of the radio base station 20 by the base-station selection unit 36 is conducted, for example, at the phase of cell search or handover.

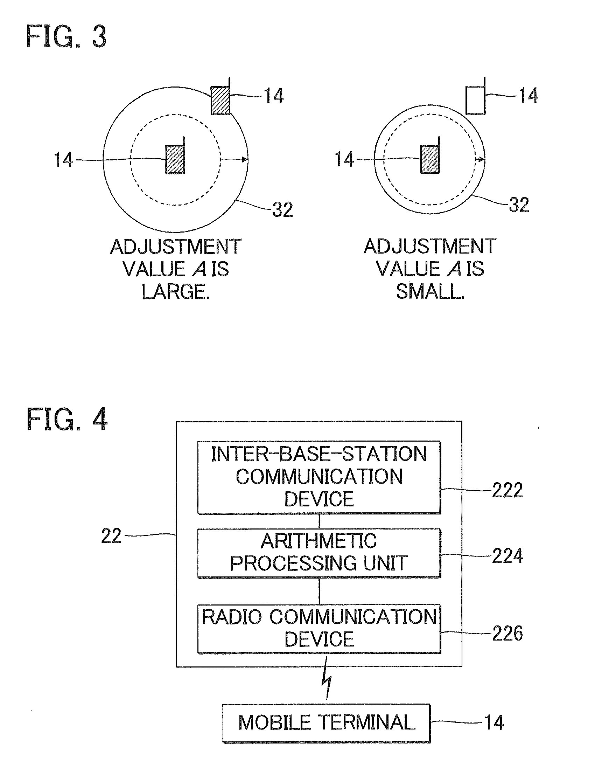

More specifically, the base-station selection unit 36 selects, from among multiple radio base stations 20 that can communicate with the mobile terminal 14, a radio base station 20 for which the received-radiowave characteristic value R obtained by the process of the characteristic-value amendment unit 34 is the maximum. If an adjusted received-radiowave characteristic value R (= R₀ + A) for a picobase station 24 that has been adjusted according to the adjustment value *A* is the maximum, the picobase station 24 is selected as the access point for the mobile terminal 14. If a received-radiowave characteristic value R (=R₀) for a macrobase station 22 is the maximum, the macrobase station 22 is selected as the access point for the mobile terminal 14. As will be understood from the above description, the adjustment of the received-radiowave characteristic values R (addition of the adjustment values *A*) by the characteristic-value amendment unit 34 functions to expand picocells Cp formed by picobase stations 24 in effect (in other words, to increase the transmission power of picobase stations 24 in effect). That is to say, as shown in Fig. 3, the higher the adjustment value *A* for a picobase station 24, the larger the expansion area of the picocell Cp in effect.

For example, even if the received-radiowave characteristic value R₀ for a picobase station 24 that has not been adjusted is lower than the received-radiowave characteristic value R₀ for a macrobase station 22, the picobase station 24 is selected as the access point for the mobile terminal 14 if the received-radiowave characteristic value R for the picobase station 24 that has been adjusted is greater than the received-radiowave characteristic value R for the macrobase station 22. If multiple picobase stations 24 of which received-radiowave characteristic values R₀ that have not been adjusted are mutually equal can communicate with the mobile terminal 14, the picobase station 24 for which the adjustment value *A* is the maximum is selected as the access point for the mobile terminal 14. In other words, as shown in Fig. 3, the picobase station 24 for which the adjustment value *A* is larger is likely to be selected as the access point for the mobile terminal 14.

Fig. 4 is a block diagram of the macrobase station 22. Each macrobase station 22 includes an inter-base-station communication device 222, an arithmetic processing unit 224, and a radio communication device 226. The inter-base-station communication device 222 communicates with other radio base stations 20 (macrobase stations 22 and picobase stations 24) within the mobile communications network 12. The radio communication device 226 is a communication instrument for wireless communication with mobile terminals 14 located in the macrocell Cm formed by the macrobase station 22 itself. The radio communication device 226 includes a receiving circuit that receives radiowaves from the mobile terminals 14 and transforms the radiowaves to electrical signals, and a transmitting circuit that transforms information to be provided to the mobile terminals 14 to radiowaves and sends the radiowaves. The arithmetic processing unit 224 controls overall operations of the radio base station 20.

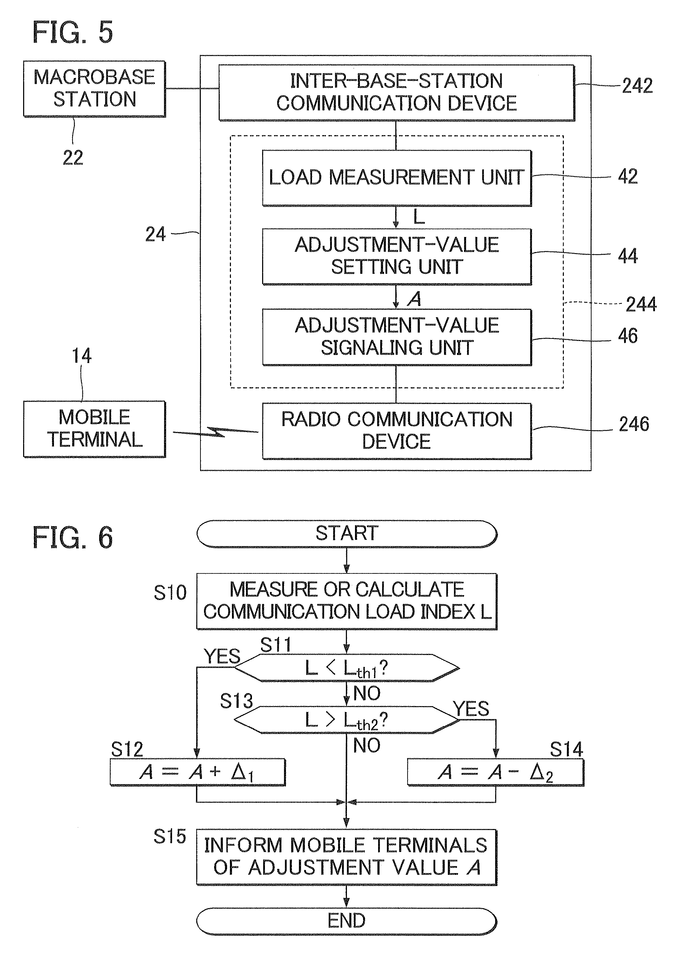

Fig. 5 is a block diagram of the picobase station 24. Each picobase station 24 includes an inter-base-station communication device 242, an arithmetic processing unit 244, and a radio communication device (radio communication unit) 246. The inter-base-station communication device 242 communicates with the macrobase station 22 to which the picobase station 24 itself is connected. The radio communication device 246 is a communication instrument for wireless communication with mobile terminals 14 located in the picocell Cp formed by the picobase station 24 itself. In a manner similar to the radio communication device 226, the radio communication device 246 includes a receiving circuit that receives radiowaves from the mobile terminals 14 and transforms the radiowaves into electrical signals, and a transmitting circuit that transforms information to be provided to the mobile terminals 14 to radiowaves and sends the radiowaves.

The arithmetic processing unit 244 controls overall operations of the picobase station 24. In the first embodiment, the arithmetic processing unit 244 performs multiple functions (a load measurement unit 42, an adjustment-value setting unit 44, and an adjustment-value signaling unit 46) by executing a program stored in a memory circuit (not shown). It is possible to use a structure in which the functions of the arithmetic processing unit 244 are distributed to multiple integrated circuits, or a structure in which each of the functions is performed by a dedicated electronic circuit (DSP).

The load measurement unit 42 measures or calculates an index value (hereinafter referred to as "communication load index") L that indicates communication load of the picobase station 24 itself. In the first embodiment, the communication load index L indicates the communication traffic. For example, the sum of the number of call originations initiated from mobile terminals 14 in the picocell Cp of the picobase station 24 and the number of call terminations to mobile terminals 14 in the picocell Cp in a unit time, or the total number of packets forwarded by the picobase station 24 in a unit time is represented by the communication load index L as the communication traffic.

The adjustment-value setting unit 44 sets the adjustment value *A* (variable) of the picobase station 24 itself according to the communication load index L measured by the load measurement unit 42. More specifically, the adjustment-value setting unit 44 sets the adjustment value *A* at a smaller value when the communication load indicated by the communication load index L is larger. For example, the adjustment-value setting unit 44 may determine the adjustment value *A* corresponding to the current communication load index L by referring to a table in which adjustment values *A* are recorded for respective values of the communication load index L. Alternatively, the adjustment-value setting unit 44 may calculate the adjustment value *A* through a calculation using a predetermined mathematical expression in which the communication load index L is a variable. Since the communication load index L may vary depending on the picobase station 24, the adjustment value *A* can be set so as to vary depending on the picobase station 24. The adjustment-value signaling unit 46 informs each mobile terminal 14 in the picocell Cp formed by the picobase station 24 itself of the adjustment value *A* set by the adjustment-value setting unit 44 by using the radio communication device 246. As described above, the adjustment value *A* is utilized by each mobile terminal 14 for selecting the radio base station 20.

Fig. 6 is a flowchart of operations of each picobase station 24 in which the arithmetic processing unit 244 sets and signals the adjustment value *A*. The process shown in Fig. 6 is repeated, for example, when interrupts occur at predetermined intervals, and the adjustment value *A* is updated at each repetition. After the start of the process of Fig. 6, the load measurement unit 42 measures or calculates the current communication load index L of the picobase station 24 itself (S 10). As will be described in detail, the adjustment-value setting unit 44 updates the adjustment value *A* (S11 through S 14) so that the communication load index L of the picobase station 24 itself becomes close to or falls within a predetermined range (Lₜₕ₁ ≤ L ≤ Lₜₕ₂).

The adjustment-value setting unit 44 determines whether or not the communication load index L measured by the load measurement unit 42 is lower than a predetermined threshold Lₜₕ₁ (S11). If the communication load index L is lower than the first threshold Lₜₕ₁ (if the decision at S11 is "yes"), the adjustment-value setting unit 44 adds a predetermined value Δ₁ to the current adjustment value *A* to obtain an updated adjustment value *A* (S12). That is to say, *A* = *A* + Δ₁. The adjustment-value signaling unit 46 informs mobile terminals 14 in the picocell Cp of the updated adjustment value *A* using the radio communication device 246 (S15), and ends the process in Fig. 6. As a result of the process, for picobase stations 24 of which communication load is small (of which communication load index L is lower than the threshold Lₜₕ₁), the adjustment value *A* is increased, so that the picobase stations 24 become likely to be selected as the access point for mobile terminals 14.

On the other hand, if the communication load index L is higher than the predetermined the first threshold Lₜₕ₁ (if the decision at S11 is "no"), the adjustment-value setting unit 44 determines whether or not the communication load index L is higher than a predetermined second threshold Lₜₕ₂ (S 13). The threshold Lₜₕ₂ is a predetermined value in excess of the threshold Lₜₕ₁. If the communication load index L is higher than the threshold Lₜₕ₂ (if the decision at S13 is "yes"), the adjustment-value setting unit 44 subtracts a predetermined value Δ₂ from the current adjustment value *A* to obtain an updated adjustment value *A* (S 14). That is to say, *A* = *A -* Δ₂. The predetermined value Δ₂ may be set, for example, at the value equal to the predetermined value Δ₁. The adjustment-value signaling unit 46 informs mobile terminals 14 in the picocell Cp of the updated adjustment value *A* (S15), and ends the process in Fig. 6. Therefore, for picobase stations 24 of which communication load is large (of which communication load index L is higher than the threshold Lₜₕ₂), the adjustment value *A* is decreased, so that the picobase stations 24 become difficult to be selected as the access point for the mobile terminals 14.

On the other hand, if the communication load index L is within a range between the first threshold Lₜₕ₁ and the second threshold Lₜₕ₂ (if the decision at S 13 is "no"), the adjustment-value signaling unit 46 informs each mobile terminal 14 of the current adjustment value *A* that is the same as the adjustment value *A* at the last process (S15), and ends the process in Fig. 6. As will be understood from the above description, the adjustment value *A* signaled from each picobase station 24 to mobile terminals 14 changes from moment to moment depending on the communication status (acting on the communication load index L) of each picobase station 24. For picobase stations 24 for which communication load is small, the picocells Cp are expanded in effect, so that the picobase stations 24 become likely to be selected as the access point for mobile terminals 14.

As has been described above, in the first embodiment, since picocells for multiple picobase stations 24 are expanded in effect, it is possible to alleviate the concentration of connected terminals on the macrobase station 22 (i.e., to equalize the number of connected terminals at macrobase stations 22 and picobase stations 24) in comparison with another system in which picocells Cp are not expanded. In addition, since the adjustment value *A* can be set so as to vary depending on the picobase station 24, the size of each picocell Cp in effect can be adjusted individually depending on the communication load of the picobase station 24. Accordingly, it is possible to alleviate the concentration of connected terminals on specific picobase stations 24 (i.e., to equalize the number of connected terminals at picobase stations 24).

In a variation of the first embodiment, it is possible to compare the communication load index L with only a single threshold Lₜₕ. In this variation, if the communication load index L is lower than the single threshold Lₜₕ, the adjustment value *A* may be increased, whereas if the communication load index L is higher than the threshold Lₜₕ, the adjustment value *A* may be decreased. However, in this variation, in response to change in the communication load, the adjustment value *A* changes too frequently and the substantial size of the picocell Cp also changes too frequently. This results in a problem in that the number of times of change of the access point for mobile terminals 14 increases significantly. In contrast, in the first embodiment, the adjustment value *A* is not changed if the communication load index L is in the range from the threshold Lₜₕ₁ to the threshold Lₜₕ₂, change in the substantial size of each picocell Cp is restricted. The first embodiment thus has an advantage that communications between mobile terminals 14 and picobase stations 24 are stabilized in comparison with the variation in which only a single threshold Lₜₕ is used.

### B: SECOND EMBODIMENT

A second embodiment of the present invention will be described. For the second and subsequent embodiments, the reference symbols used in the above description are also used for identifying elements of which the action or function is the same as in those of the first embodiment, and description of the elements may be omitted for descriptive purposes.

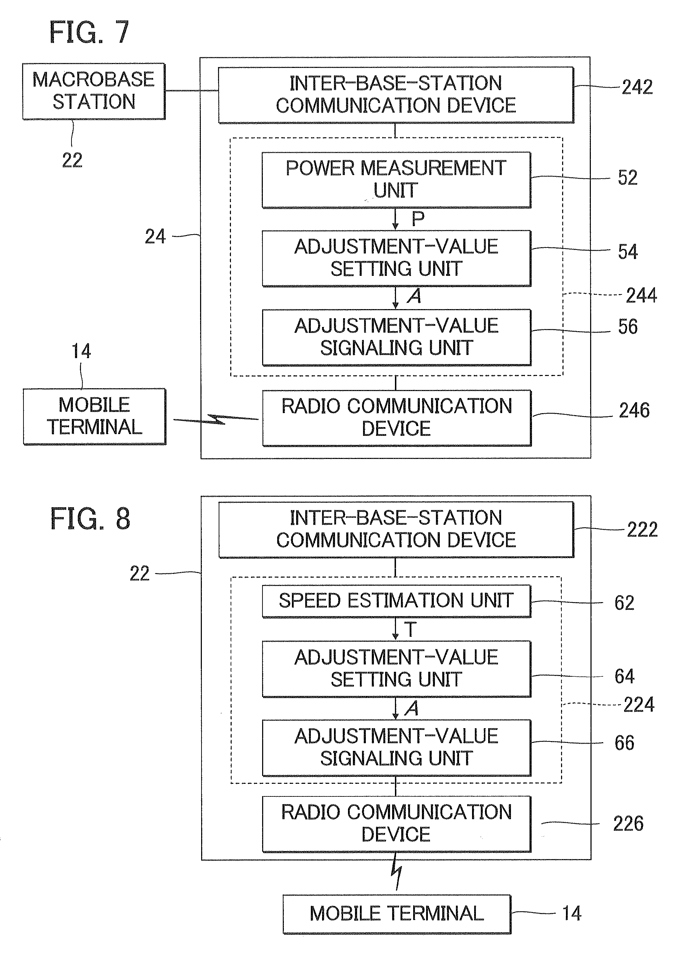

Fig. 7 is a block diagram of the picobase station 24 in the second embodiment. As shown in Fig. 7, the arithmetic processing unit 244 in each picobase station 24 serves as a power measurement unit 52, an adjustment-value setting unit 54, and an adjustment-value signaling unit 56 by executing a program stored in a memory circuit. It is possible to use a structure in which the functions of the arithmetic processing unit 244 are distributed to multiple integrated circuits, or a structure in which each of the functions is performed by a dedicated electronic circuit (DSP).

The radio communication device 246 of the picobase station 24 has a function for receiving radiowaves from the macrobase station 22 that forms the macrocell Cm including the picocell Cp of the picobase station 24 itself, in addition to the function for wireless communication with mobile terminals 14. The power measurement unit 52 measures the power (reception power) P of radiowaves that the radio communication device 246 receives from the macrobase station 22. The longer the distance between the picobase station 24 and the macrobase station 22, the less the reception power P. In other words, the reception power P serves as an index indicating the distance between the picobase station 24 and the macrobase station 22.

The adjustment-value setting unit 54 sets the adjustment value A (variable) of the picobase station 24 itself according to the reception power P measured by the power measurement unit 52. More specifically, the adjustment-value setting unit 54 sets the adjustment value A at a larger value when the reception power P is higher (when the distance between the picobase station 24 and the macrobase station 22 is shorter). For example, the adjustment-value setting unit 44 may determine the adjustment value *A* corresponding to the reception power P by referring to a table in which adjustment values *A* are recorded for respective values of the reception power P. Alternatively, the adjustment-value setting unit 44 may calculate the adjustment value *A* through a calculation using a predetermined mathematical expression in which the reception power P is a variable. Since the reception power P may vary depending on the picobase station 24 according to the distance from the macrobase station 22 (according to the position of the picobase station 24), the adjustment value *A* can be set so as to vary depending on the picobase station 24. In a manner similar to the adjustment-value signaling unit 46 of the first embodiment, the adjustment-value signaling unit 56 informs each mobile terminal 14 in the picocell Cp formed by the picobase station 24 itself of the adjustment value *A* set by the adjustment-value setting unit 54 by using the radio communication device 246.

Operations of the mobile terminal 14 are the same as those in the first embodiment. In other words, the base-station selection unit 36 selects, from among multiple radio base stations 20 (macrobase station 22 or picobase station 24) that can communicate with the mobile terminal 14, a radio base station 20 for which the received-radiowave characteristic value R obtained by the process of the characteristic-value amendment unit 34 is the maximum. As will be understood from the above description, for picobase stations 24 at which the reception power P from the macrobase station 22 is large (in which the distance from the macrobase station 22 is small), the adjustment values *A* are set at a higher value and the picocells Cp are expanded in effect.

Radiowaves with high reception power P from the picobase station 24 are received in picocells Cp of picobase stations 24 near the picobase station 24. Accordingly, in a system in which received-radiowave characteristic values R₀ of picobase stations 24 are not adjusted, there is a high probability that the macrobase station 22 is selected as the access point for the mobile terminal 14 even if the mobile terminal 14 is located in any of picocells Cp. In the second embodiment, the shorter the distance to the macrobase station 22, the greater the adjustment value *A* set for the picobase station 24, and the picocell Cp for the picobase station 24 is substantially expanded. Accordingly, it is possible to alleviate the concentration of connected terminals on the macrobase station 22 (i.e., to equalize the number of connected terminals at macrobase stations 22 and picobase stations 24). For the picobase station 24 in a location at which the reception power P from the macrobase station 22 is low, the adjustment value *A* may be set at a small value. However, the picobase station 24 in the location that is very remote from the macrobase station 22 is likely to be selected as the access point for mobile terminals 14 even if the size of picocells Cp is not significantly expanded.

### C: THIRD EMBODIMENT

In the first embodiment and the second embodiment, each picobase station 24 sets the adjustment value *A* for the picobase station 24 itself, and signals it to each mobile terminal 14. In the third embodiment, the macrobase station 22 sets the adjustment value *A* for each of multiple picobase stations 24 that form picocells Cp in the macrocell Cm of the macrobase station 22.

Fig. 8 is a block diagram of the picobase station 24 in the third embodiment. As shown in Fig. 8, the arithmetic processing unit 244 in each picobase station 24 performs multiple functions (a speed estimation unit 62, an adjustment-value setting unit 64, and an adjustment-value signaling unit 66) by executing a program stored in a memory circuit (not shown). It is possible to use a structure in which the functions of the arithmetic processing unit 244 shown in Fig. 8 are distributed to multiple integrated circuits, or a structure in which each of the functions is performed by a dedicated electronic circuit (DSP).

The speed estimation unit 62 determines a total communication speed T. The total communication speed T is an index indicating total communication efficiency among the macrobase station 22 and the multiple picobase stations 24 within the macrocell Cm of the macrobase station 22. The total communication speed T coincides with the total sum of the communication speeds (throughputs) of the multiple picobase stations 24 within the macrocell Cm and the communication speed of the macrobase station 22 itself. For example, the amount of information forwarded in every unit time by each picobase station 24 is considered to the communication speed of the picobase station 24, and the communication speed is signaled to the macrobase station 22. The speed estimation unit 62 calculates the sum of the communication speed of the macrobase station 22 itself and the communication speeds signaled from respective picobase stations 24, as the total communication speed T.

The adjustment-value setting unit 64 sets the adjustment value *A* (variable) for each picobase station 24 within the macrocell Cm formed by the macrobase station 22, depending on the total communication speed T. More specifically, the adjustment-value setting unit 64 calculates individually the adjustment values *A* of the respective picobase stations 24 so as to increase the total communication speed T. The adjustment-value signaling unit 66 signals the adjustment value *A* for each picobase station 24 determined by the adjustment-value setting unit 64 to the picobase station 24 by using the inter-base-station communication device 222. Each picobase station 24 signals the adjustment value *A* signaled from the macrobase station 22 to each mobile terminal 14 within the picocell Cp of the picobase station 24 itself.

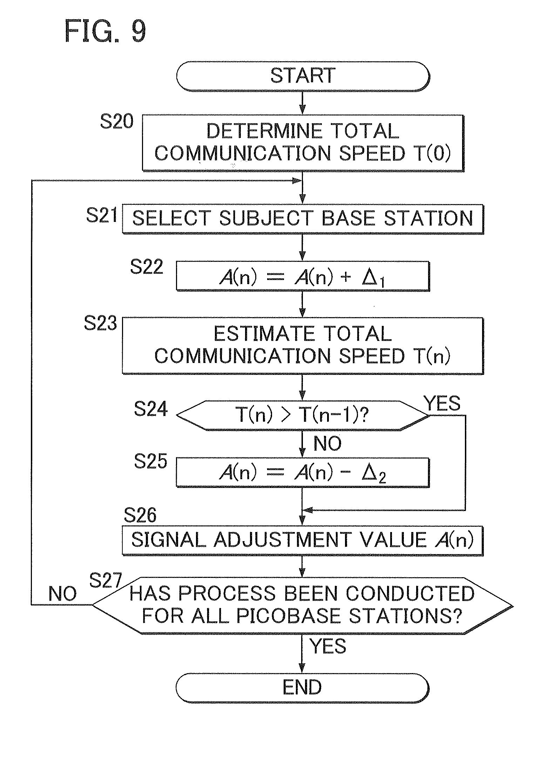

Fig. 9 is a flowchart of operations of the macrobase station 22 for setting and signaling the adjustment value A of each picobase station 24. The process shown in Fig. 9 is repeated, for example, when interrupts occur at predetermined intervals. The adjustment values *A*(1) to *A*(N) for multiple (N) picobase stations 24 corresponding to the macrobase station 22 may be updated at each repetition. After the start of the process of Fig. 9, the speed estimation unit 62 obtains communication speeds of the N picobase stations 24 from the respective picobase stations 24 within the macrocell Cm, and determines the current total communication speed T(0) (S20).

The adjustment-value setting unit 64 selects a picobase station 24 (hereinafter referred to as a "subject base station 24(n)") from among the N picobase stations 24 (S21). The subsequent process corresponding to steps S22 to S26 (hereinafter referred to as "adjustment value setting process") is sequentially executed for each of the N picobase stations 24 within the macrocell Cm by applying a different picobase station 24 to the subject base station 24(n) repeatedly, as a result of the negative decision at S27.

Once the adjustment value setting process starts, the adjustment-value setting unit 64 increases the current adjustment value *A*(n) of the subject base station 24(n) by a change amount Δ₁ (S22). Then, the speed estimation unit 62 estimates the total communication speed T(n) under the assumption that the adjustment value *A*(n) for the subject base station 24(n) is increased by the change amount Δ₁ (S23). The scheme for estimating the total communication speed T(n) is optional. For example, the amount of change in the total communication speed T(n) when the adjustment value *A* is changed by the change amount Δ₁ may be obtained statistically or experimentally in advance, and the speed estimation unit 62 may calculate the current total communication speed T(n) by changing the total communication speed T(n-1) determined at step S23 of the last adjustment value setting process by the amount of change prepared in advance. In the adjustment value setting process of the first round, the speed estimation unit 62 may calculate the current total communication speed T(n) by changing the total communication speed T(0) determined at step S20 by the amount of change prepared in advance.

The adjustment-value setting unit 64 determines whether or not the total communication speed T(n) determined at step S23 is higher than the total communication speed T(n-1) determined at step S23 of the last adjustment value setting process (i.e., the total communication speed if the adjustment value *A*(n) of the subject base station 24(n) is not increased) (S24). In the adjustment value setting process of the first round, at step S24, it is determined whether or not the total communication speed T(n) determined at last step S23 is higher than the total communication speed T(0) determined at step S20. If the determination at step S24 is affirmative (if T(n) > T(n-1)), the adjustment-value signaling unit 66 signals the adjustment value *A*(n) changed at step S22 to the subject base station 24(n) by using the inter-base-station communication device 222 (S26). In other words, if it is expected that the total communication speed T will increase as a result of increase in the adjustment value *A*(n), the increased value is fixed as the adjustment value *A*(n) for the subject base station 24(n).

On the other hand, if the determination at step S24 is negative (if T(n) ≤ T(n-1)), the adjustment-value setting unit 64 decreases the adjustment value *A*(n) increased at step S22 by a change amount Δ₂ (S25). The change amount Δ₂ may be set at, for example, the same value as the change amount Δ₁. In other words, if it is expected that the total communication speed T will decrease as a result of increase in the adjustment value *A*(n) (if the determination at step S24 is "no"), the increase in the adjustment value *A*(n) at step S22 is canceled. The adjustment-value signaling unit 66 signals the adjustment value *A*(n) obtained at step S25 to the subject base station 24(n) by using the inter-base-station communication device 222 (S26).

The process shown in Fig. 9 ends when the adjustment value setting process has been conducted for all of N picobase stations 24 located in the macrocell Cm of the macrobase station 22 (if the determination at S27 is "yes"). As will be understood from the above description, each of the adjustment values *A*(1) to *A*(N) for each picobase station 24 is updated sequentially in every process in Fig. 9 so as to increase the total communication speed T. Operations of the mobile terminals 14 that have received the adjustment values *A*(n) from the picobase stations 24 are the same as those in the first embodiment.

In the third embodiment, in a manner similar to the first embodiment, since picocells for multiple picobase stations 24 are expanded in effect, depending on the adjustment values *A*, it is possible to alleviate the concentration of connected terminals on the macrobase station 22 in comparison with another system in which picocells Cp are not expanded. In addition, since the adjustment value *A* can be set so as to vary depending on the picobase station 24 individually, it is possible to alleviate the concentration of connected terminals on specific picobase stations 24 (i.e., to equalize the number of connected terminals at picobase stations 24). In particular, in the third embodiment, since the adjustment value *A*(n) for each picobase station 24 is set so as to increase the total communication speed T, it is possible to improve the entire communication efficiency in the single macrobase station 22 and N picobase stations 24 corresponding to the macrobase station 22.

### D: VARIATIONS

Various variations may be applied to the above-described embodiments. Specific variations are exemplified below. Two or more variations selected from among the following may be combined.

### (1) VARIATION 1

The communication load index L in the first embodiment is not limited to be the communication traffic of the picobase station 24. For example, the communication load index L may be the total number of the mobile terminals 14 connected to the picobase station 24 (the number of connected terminals) or the ratio of the resources actually used for communications with mobile terminals 14 to the resources available in the picobase station 24 (the resource usage ratio). The resources may be, for example, frequency resource blocks in OFDMA or downlink channelization codes in CDMA.

### (2) VARIATION 2

The above-exemplified embodiments may be combined. For example, the adjustment value *A* (variable) may be set in accordance with both of the communication load index L exemplified in conjunction with the first embodiment and the reception power P exemplified in conjunction with the second embodiment. For example, the adjustment value *A* may be set in accordance with a weighted sum of the communication load index L and the reception power P.

### (3) VARIATION 3

The scheme for adjusting the received-radiowave characteristic value R₀ using the adjustment value *A* may be altered. For example, it is possible to calculate an adjusted received-radiowave characteristic value R by multiplying the adjustment value *A* by the received-radiowave characteristic value R₀, or by a predetermined mathematical expression in which the received-radiowave characteristic value R₀ and the adjustment value *A* are variables. The adjustment value *A* may be calculated in a manner suitable for the scheme for adjusting the received-radiowave characteristic value R₀.

### (4) VARIATION 4

In the above description, the picobase station 24 is exemplified as a radio base station 20 that forms a small sized cell C. However, the sort of the radio base station 20 that forms a cell C within the macrocell Cm may be freely selected. For example, a microbase station forming a cell (microcell) C having a radius from several tens of meters to several hundred meters or a femtobase station forming a cell (femtocell) C having a radius of several meters may be used instead of the picobase station 24 in the above-described embodiments. It is possible to use a structure including three or more sorts of radio base station 20 having different transmission powers. As will be understood from the above description, the mobile communications network 12 can be comprehended as a communications network including radio base stations 20 forming first cells (e.g., the macrobase stations 22 in the embodiments) and radio base stations 20 forming second cells (e.g., picobase stations 24 in embodiments) of which the size is smaller than that of the first cell. In other words, the mobile communications network 12 can be understood as a communications network including multiple sorts of radio base station 20 having different transmission powers.

### REFERENCE SYMBOLS

- 100:: Radio Communications System
- 12:: Mobile Communications Network
- 14:: Mobile Terminal
- 142, 226:: Radio Communication Device
- 144, 224, 244:: Arithmetic Processing Unit
- 20:: Radio Base Station
- 22:: Macrobase Station (First Radio Base Station)
- 222, 242:: Inter-Base-Station Communication Device
- 24:: Picobase Station (Second Radio Base Station)
- 246:: Radio Communication Device (Radio Communication Unit)
- 32:: Characteristic-Value Measurement Unit
- 34:: Characteristic-Value Amendment Unit
- 36:: Base-Station Selection Unit
- 42:: Load Measurement Unit
- 44, 54, 64:: Adjustment-Value Setting Unit
- 46, 56, 66:: Adjustment-Value Signaling Unit
- 52:: Power Measurement Unit
- 62:: Speed Estimation Unit

## Claims

1. A mobile communications network comprising multiple radio base stations, each of which is adapted for communicating with a mobile terminal, the mobile terminal measuring or calculating received-radiowave characteristic values each indicating characteristics of radiowaves from the multiple radio base stations,
wherein the multiple radio base stations includes a first radio base station that forms a first cell and multiple second radio base stations, each forming a second cell within the first cell, the second cell having an area that is smaller than that of the first cell, and
wherein each of the multiple second radio base stations comprises:
a load measurement unit adapted for measuring or calculating a communication load index of the second radio base station;
an adjustment-value setting unit adapted for setting an adjustment value that is used by the mobile terminal to change the received-radiowave characteristic value of radiowaves from the second radio base station, depending on the communication load index, the adjustment-value setting unit increases the adjustment value if the communication load index is lower than a first threshold, the adjustment-value setting unit decreases the adjustment value if the communication load index is higher than a second threshold that is higher than the first threshold; and
an adjustment-value signaling unit adapted for signaling the adjustment value set by the adjustment-value setting unit to the mobile terminal.

2. The mobile communications network according to claim 1, wherein each of the multiple second radio base stations further comprises:
a radio communication unit adapted for communicating wirelessly with the first radio base station; and
a power measurement unit adapted for measuring a reception power received at the radio communication unit from the first radio base station, wherein the adjustment-value setting unit sets the adjustment value that is used by the mobile terminal to change the received-radiowave characteristic value of radiowaves from the second radio base station, depending on the communication load index measured by the load measurement unit and the reception power measured by the power measurement unit.

3. A mobile communications network comprising multiple radio base stations, each of which is adapted for communicating with a mobile terminal, the mobile terminal measuring or calculating received-radiowave characteristic values each indicating characteristics of radiowaves from the multiple radio base stations,
wherein the multiple radio base stations includes a first radio base station that forms a first cell and multiple second radio base stations, each forming a second cell within the first cell, the second cell having an area that is smaller than that of the first cell, and
wherein each of the multiple second radio base stations comprises:
a radio communication unit adapted for communicating wirelessly with the first radio base station;
a power measurement unit adapted for measuring a reception power received at the radio communication unit from the first radio base station;
an adjustment-value setting unit adapted for setting an adjustment value that is used by the mobile terminal to change the received-radiowave characteristic value of radiowaves from the second radio base station, depending on the reception power measured by the power measurement unit; and
an adjustment-value signaling unit adapted for signaling the adjustment value set by the adjustment-value setting unit to the mobile terminal.

4. A mobile communications network comprising multiple radio base stations, each of which is adapted for communicating with a mobile terminal, the mobile terminal measuring or calculating received-radiowave characteristic values each indicating characteristics of radiowaves from the multiple radio base stations,
wherein the multiple radio base stations includes a first radio base station that forms a first cell and multiple second radio base stations, each forming a second cell within the first cell, the second cell having an area that is smaller than that of the first cell, and
wherein the first radio base station comprises:
a speed estimation unit adapted for estimating a total sum of communication speeds of the first radio base station and the multiple second radio base stations;
an adjustment-value setting unit adapted for setting an adjustment value for each second radio base station that is used by the mobile terminal to change the received-radiowave characteristic value of radiowaves from the second radio base station, so as to increase the total sum of the communication speeds of the first radio base station and the multiple second radio base stations from the total sum estimated by the speed estimation unit; and
an adjustment-value signaling unit adapted for signaling the adjustment values for the respective second radio base stations set by the adjustment-value setting unit to the mobile terminals via the second radio base stations.

5. A radio base station adapted for communicating with a mobile terminal, the mobile terminal measuring or calculating received-radiowave characteristic values each indicating characteristics of radiowaves from multiple radio base stations, wherein the radio base station communicates with a first radio base station that forms a first cell, and forms a second cell within the first cell, the second cell having an area that is smaller than that of the first cell, and
wherein the radio base station comprises:
a load measurement unit adapted for measuring or calculating a communication load index of the second radio base station;
an adjustment-value setting unit adapted for setting an adjustment value that is used by the mobile terminal to change the received-radiowave characteristic value of radiowaves from the second radio base station, depending on the communication load index, the adjustment-value setting unit increases the adjustment value if the communication load index is lower than a first threshold, the adjustment-value setting unit decreases the adjustment value if the communication load index is higher than a second threshold that is higher than the first threshold; and
an adjustment-value signaling unit adapted for signaling the adjustment value set by the adjustment-value setting unit to the mobile terminal.

6. A radio base station adapted for communicating with a mobile terminal, the mobile terminal measuring or calculating received-radiowave characteristic values each indicating characteristics of radiowaves from multiple radio base stations, wherein the radio base station communicates with a first radio base station that forms a first cell, and forms a second cell within the first cell, the second cell having an area that is smaller than that of the first cell, and
wherein the radio base station comprises:
a radio communication unit adapted for communicating wirelessly with the first radio base station;
a power measurement unit adapted for measuring a reception power received at the radio communication unit from the first radio base station;
an adjustment-value setting unit adapted for setting an adjustment value that is used by the mobile terminal to change the received-radiowave characteristic value of radiowaves from the second radio base station, depending on the reception power measured by the power measurement unit; and
an adjustment-value signaling unit adapted for signaling the adjustment value set by the adjustment-value setting unit to the mobile terminal.

7. A radio base station adapted for communicating with a mobile terminal, the mobile terminal measuring or calculating received-radiowave characteristic values each indicating characteristics of radiowaves from the multiple radio base stations, wherein the radio base station forms a first cell and communicates with multiple second radio base stations, each forming a second cell within the first cell, the second cell having an area that is smaller than that of the first cell, and
wherein the radio base station comprises:
a speed estimation unit adapted for estimating a total sum of communication speeds of the first radio base station and the multiple second radio base stations;
an adjustment-value setting unit adapted for setting an adjustment value for each second radio base station that is used by the mobile terminal to change the received-radiowave characteristic value of radiowaves from the second radio base station, so as to increase the total sum of the communication speeds of the first radio base station and the multiple second radio base stations from the total sum estimated by the speed estimation unit; and
an adjustment-value signaling unit adapted for signaling the adjustment values for the respective second radio base stations set by the adjustment-value setting unit to the mobile terminals via the second radio base stations.
